# EUROPÄISCHE PATENTANMELDUNG

(11) **EP 1 184 395 A2**
(43) Veröffentlichungstag der Anmeldung: **06.03.2002**
(21) Anmeldenummer: 01119977.5
(22) Anmeldetag: 18.08.2001
(51) Int. Cl.: C08F 10/00, C08F 4/654, C08F 4/656

(54) **Katalysatorsysteme vom Typ der Ziegler-Natta-Katalysatoren und ein Verfahren zu deren Herstellung**

(30) Priorität: 30.08.2000 DE 10042403
(71) Anmelder: Basell Polyolefine GmbH, 77694 Kehl (DE)
(72) Erfinder: Föttinger, Klaus, Dr., 68199 Mannheim (DE); Hüffer, Stephan, Dr., 67063 Ludwigshafen (DE); Karer, Rainer, 67657 Kaiserslautern (DE)

(57) **Zusammenfassung**

Verfahren zur Herstellung von Katalysatorsystemen vom Typ der Ziegler-Natta-Katalysatoren, dadurch gekennzeichnet, dass es folgende Schritte umfasst:
- A): Kontaktieren eines anorganischen Metalloxides, welches eine darauf abgeschiedene Magnesiumverbindung enthält mit einer tetravalenten Titanverbindung,
- B): gegebenenfalls Kontaktieren der so erhaltenen Zwischenstufe mit einer Elektronendonorverbindung und
- C): Kontaktieren der nach Schritt A) oder B) erhaltenen Zwischenstufe mit einem Polysiloxan,
damit erhältliche Katalysatorsysteme, ein Verfahren zur Polymerisation von Olefinen, sowie daraus erhältliche Polymere und Copolymere.

## Beschreibung

Die vorliegende Erfindung betrifft Katalysatorsysteme vom Typ der Ziegler-Natta-Katalysatoren, ein Verfahren zu deren Herstellung, ein Verfahren zur Polymerisation von Olefinen, sowie daraus erhältliche Polymere und Copolymere.

Katalysatorsysteme vom Typ der Ziegler-Natta-Katalysatoren sind seit langem bekannt. Diese Systeme werden insbesondere zur Polymerisation von C₂-C₁₀-Alk-1-enen verwendet und enthalten u.a. Verbindungen des mehrwertigen Titans, Aluminiumhalogenide und/oder Aluminiumalkyle, sowie ein geeignetes Trägermaterial. Die Herstellung der Ziegler-Natta Katalysatoren geschieht üblicherweise in zwei Schritten. Zuerst wird die titanhaltige Feststoffkomponente hergestellt. Anschließend wird diese mit dem Cokatalysator umgesetzt. Mit Hilfe der so erhaltenen Katalysatoren wird anschließend die Polymerisation durchgeführt.

Um die Entstehung von kohlenwasserstofflöslichen Polymeranteilen bei der (Co)polymerisation von Ethylen mit α-Olefinen zu vermeiden wird als weitere Komponente in den Ziegler-Natta-Katylsatoren oftmals eine Lewisbase verwendet. So werden z.B. in EP-A-225452 Siloxane, in DE-A-3538577 bis 3538580 Carbonsäureester, Ketone und Amine, und in EP-A-212519 aliphatische Ether als weitere Katalysatorkomponente eingesetzt.

Mit Hilfe des aus der EP-B-341539 bekannten Verfahrens werden in der Gasphase Polymerisate erhalten, welche einen vergleichsweise niedrigen Feingutanteil ohne Feinstgutanteil aufweisen. Der verwendete Katalysator enthält als Aktivkomponente TiCl₃•nAlCl₃ mit n gleich 0 bis 0,5, eine magnesiumhaltige Komponente, ein Polysiloxan, Kieselgel als Trägerkomponente, eine Aluminiumalkylverbindung und eine Lewisbase. Durch die Verwendung des Polysiloxans wird der Anteil an kohlenwasserstofflöslichen Polymeranteilen zwar weiter erniedrigt und die Morphologie des Polymerisates deutlich verbessert, jedoch wird die Aktivität des Katalysatorsystems durch die Anwesenheit des Polysiloxans stark vermindert.

Der vorliegenden Erfindung lag daher die Aufgabe zugrunde, ausgehend von dem in der EP-B-341539 beschriebenen Katalysatorsystem ein verbessertes Katalysatorsystem vom Typ der Ziegler-Natta-Katalysatoren zu entwickeln, welches den obengenannten Nachteil hinsichtlich der verminderten Aktivität bei der Verwendung von Polysiloxanen nicht mehr aufweist.

Demgemäß wurde ein Verfahren zur Herstellung von Katalysatorsystemen vom Typ der Ziegler-Natta-Katalysatoren gefunden, dadurch gekennzeichnet, dass es folgende Schritte umfasst:
A) Kontaktieren eines anorganischen Metalloxides, welches eine darauf abgeschiedene Magnesiumverbindung enthält, mit einer tetravalenten Titanverbindung,
B) gegebenenfalls Kontaktieren der so erhaltenen Zwischenstufe mit einer Elektronendonorverbindung und
C) Kontaktieren der nach Schritt A) oder B) erhaltenen Zwischenstufe mit einem Polysiloxan.

Im Hinblick auf den Stand der Technik war es überraschend, daß durch die Verwendung von tetravalenten Titanverbindungen in dem erfindungsgemäßen Verfahren nicht nur der Nachteil des Standes der Technik vermieden werden konnte, sondern die Aktivität des Katalysatorsystems durch die Zugabe des Polysiloxanes deutlich erhöht wird.

Ein weiterer Gegenstand der Erfindung sind Katalysatorsysteme vom Typ der Ziegler-Natta-Katalysatoren herstellbar durch das erfindungsgemäße Verfahren und ein Verfahren zur Polymerisation oder Copolymerisation von Olefinen bei Temperaturen von 20 bis 150°C und Drücken von 1 bis 100 bar, dadurch gekennzeichnet, daß die Polymerisation oder Copolymerisation in Gegenwart mindestens eines erfindungsgemäßen Katalysatorsystems und einer Aluminiumverbindung als Cokatalysator durchgeführt wird.

Des weiteren betrifft die Erfindung Ethylenhomopolymerisate und -copolymerisate mit α-Olefinen erhältlich nach dem erfindungsgemäßen Polymerisationsverfahren, deren Verwendung zur Herstellung von Folien, Fasern und Formkörpern und Folien, Fasern und Formkörper, welche die erfindungsgemäßen Ethylenhomopolymerisate und -copolymerisate enthalten.

Das anorganische Metalloxid, welches in Schritt A) verwendet wird, enthält eine darauf abgeschiedene Magnesiumverbindung, wobei die Menge an Magnesiumverbindung in der Regel 1 bis 200 Gew% des anorganischen Metalloxides, bevorzugt 1 bis 100 Gew% des anorganischen Metalloxides und besonders bevorzugt 1 bis 10 Gew% des anorganischen Metalloxides beträgt. Die Magnesiumverbindung ist in der Regel gleichmäßig über das anorganische Metalloxid verteilt. Das anorganische Metalloxid, welches die darauf abgeschiedene Magnesiumverbindung enthält, ist durch ein Verfahren herstellbar, welches folgende Schritte umfasst:
a) Optionales Kontaktieren eines anorganischen Metalloxides mit einer metallorganischen Verbindung der Gruppe 13 des Periodensystems (gemäss IUPAC-Vorschlag 1985),
b) Kontaktieren der nach Schritt a) erhaltenen Zwischenstufe oder des anorganischen Metalloxides mit einer Magnesiumverbindung MgRₙX₂₋ₙ,
   worin X unabhängig voneinander Fluor, Chlor, Brom, Jod, Wasserstoff, NR₂, OR, SR, SO₃R oder OC(O)R, und R unabhängig voneinander ein C₁-C₂₀ lineares, verzweigtes oder cyclisches Alkyl, ein C₂-C₁₀-Alkenyl, ein Alkylaryl mit 1-10 C-Atomen im Alkylrest und 6-20 C-Atomen im Arylrest oder ein C₆-C₁₈-Aryl bedeutet und n gleich 1 oder 2 ist,
   und anschliessend
c) Kontaktieren der nach Schritt b) erhaltenen Zwischenstufe mit einem Alkohol der Formel R-OH, worin R die unter b) genannte Bedeutung hat.

R ist eine unabhängige Variable, die in der Beschreibung mehrmals verwendet wird und für alle Verbindungen folgende Bedeutung hat: R ist unabhängig voneinander ein C₁-C₂₀ lineares, verzweigtes oder cyclisches Alkyl, wie z.B. Methyl, Ethyl, n-Propyl, iso-Propyl, n-Butyl, sec.-Butyl, iso-Butyl, tert.-Butyl, n-Pentyl, sec.-Pentyl, iso-Pentyl, n-Hexyl, n-Heptyl, n-Octyl, n-Nonyl, n-Decyl oder n-Dodecyl, Cyclopropan, Cyclobutan, Cyclopentan, Cyclohexan, Cycloheptan, Cyclooctan, Cyclononan oder Cyclododekan, ein C₂-C₁₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooctenyl oder Cyclooktadienyl, ein Alkylaryl mit 1-10 C-Atomen im Alkylrest und 6-20 C-Atomen im Arylrest wie z.B. Benzyl, o-, m-, p-Methylbenzyl, 1- oder 2-Ethylphenyl, oder ein C₆-C₁₈-Aryl, wobei der Arylrest durch weitere Alkylgruppen substituiert sein kann, wie z.B. Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, 2-Biphenyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6-oder 3,4,5-Trimethylphenyl und wobei gegebenenfalls auch zwei R zu einem 5- oder 6-gliedrigen Ring verbunden sein können und die organischen Reste R auch durch Halogene, wie z.B. Fluor, Chlor oder Brom substituiert sein können.

Auch X ist eine Variable, welche in der Beschreibung mehrmals verwendet hat, wobei X unabhängig voneinander ein Fluor, Chlor, Brom, Jod, Wasserstoff, Amid NR₂, Alkoholat OR, Thiolat SR, Sulfonat SO₃R oder Carboxylat OC(O)R ist, worin R die obige Bedeutung hat. Als NR₂ kann beispielsweise Dimethylamino, Diethylamino oder Diisopropylamino, als OR Methoxy, Ethoxy, Isopropoxy, Butoxy, Hexoxy, oder 2-Ethylhexoxy, als SO₃R Methylsulfonat, Trifluoromethylsulfonat oder Toluolsulfonat und als OC(O)R Formiat, Acetat oder Propionat verwendet werden.

Bevorzugt wird das anorganische Metalloxid in Schritt a) zuerst mit einer metallorganischen Verbindung MRₘX₃₋ₘ umgesetzt, worin R die obige Bedeutung hat, M ein Metall der Gruppe 13 des Periodensystems (gemäss IUPAC-Vorschlag 1985), bevorzugt B, Al oder Ga und besonders bevorzugt Al ist und m gleich 1, 2 oder 3 ist.

Bevorzugt wird als metallorganischen Verbindung der Gruppe 13 des Periodensystems, eine Aluminiumverbindung AlRₘX₃₋ₘ verwendet, worin die Variablen die obige Bedeutung besitzen. Geeignete Verbindungen sind z.B. Trialkylaluminiumverbindungen wie Trimethylaluminium, Triethylaluminium, Triisobutylaluminium oder Tributylaluminium, Dialkylaluminiumhalogenide wie z.B. Dimethylaluminiumchlorid, Diethylaluminiumchlorid oder Dimethylaluminiumfluorid, Alkylaluminiumdihalogenide wie z.B. Methylaluminiumdichlorid oder Ethylaluminiumdichlorid, oder Gemische wie z.B. Methylaluminiumsesquichlorid. Auch die Hydrolyseprodukte von Aluminiumalkylen mit Alkoholen können eingesetzt werden. Bevorzugt werden Dialkylaluminiumhalogenide und besonders bevorzugt Dimethylaluminiumchlorid oder Diethylaluminiumchlorid verwendet.

Als anorganisches Metalloxid wird z.B. Silicagel, Aluminiumoxid, Hydrotalcit, mesoporöse Materialien und Aluminosilikat und insbesondere Silicagel verwendet.

Das anorganische Metalloxid kann vor der Umsetzung in Schritt a) oder b) auch schon partiell oder ganz modifiziert werden. Das Trägermaterial kann z.B. unter oxidierenden oder nicht-oxidierenden Bedingungen bei Temperaturen von 100 bis 1000°C, gegebenenfalls in Gegenwart von Fluorierungsmitteln, wie beispielsweise Ammoniumhexafluorosilikat, behandelt werden. So kann unter anderem der Wasser- und/oder OH-Gruppengehalt variiert werden. Bevorzugt wird das Trägermaterial vor seiner Verwendung im erfindungsgemässen Verfahren im Vakuum 1 bis 10 Stunden bei 100 bis 300°C getrocknet.

In der Regel besitzt das anorganische Metalloxid einen mittleren Teilchendurchmesser von 5 bis 200 µm, bevorzugt von 10 bis 100 µm, und besonders bevorzugt von 20 bis 70 µm, ein Porenvolumen von 0,1 bis 10 ml/g, insbesondere von 1,0 bis 4,0 ml/g, und eine spezifische Oberfläche von 10 bis 1000 m²/g, insbesondere von 100 bis 600 m²/g. Das anorganische Metalloxid ist bevorzugt sphärisch.

Die spezifische Oberfläche und das mittlere Porenvolumen werden durch Stickstoff-Adsorption gemäss der BET Methode, wie z.B. in S. Brunauer, P. Emmett und E. Teller im Journal of the American Chemical Society, 60, (1939), Seite 209-319 beschrieben, bestimmt.

Ganz besonders bevorzugt wird als anorganisches Metalloxid sprühgetrocknetes Silicagel eingesetzt. Im allgemeinen weisen die Primärpartikel des sprühgetrockneten Silicagels einen mittleren Teilchendurchmesser von 1 bis 10 µm, insbesondere von 1 bis 5 µm auf. Bei den sogenannten Primärpartikeln handelt es sich dabei um poröse, granuläre Silicagelpartikel, welche durch Mahlung, gegebenenfalls nach entsprechender Siebung, aus einem SiO₂-Hydrogel erhalten werden. Durch Sprühtrocknung der mit Wasser oder einem aliphatischen Alkohol vermaischten Primärpartikel kann dann das sprügetrocknete Silicagel dargestellt werden. Ein solches Silicagel ist aber auch im Handel erhältlich. Das so erhältliche sprühgetrocknete Silicagel ist u.a. auch noch dadurch charakterisiert, daß es Hohlräume bzw. Kanäle mit einem mittleren Durchmesser von 1 bis 10 µm, insbesondere von 1 bis 5 µm aufweist, deren makroskopischer Volumenanteil am Gesamtpartikel im Bereich von 5 bis 20 %, insbesondere im Bereich von 5 bis 15 % liegt. Diese Hohlräume bzw. Kanäle wirken sich zumeist positiv auf die diffusionskontrollierte Versorgung mit Monomeren und Cokatalysatoren und damit auch auf die Polymerisationskinetik aus.

Schritt a) kann in jedem aprotischen Lösungsmittel durchgeführt werden. Besonders geeignet sind aliphatische und aromatische Kohlenwasserstoffe in denen die metallorganische Verbindung der Gruppe 3 des Periodensystems löslich ist, wie z.B. Pentan, Hexan, Heptan, Oktan, Dodekan, einem Benzol oder einem C₇- bis C₁₀-Alkylbenzol wie Toluol, Xylol oder Ethylbenzol. Ein besonders bevorzugtes Lösungsmittel ist Ethylbenzol.

Meist wird das anorganische Metalloxid im aliphatischen und aromatischen Kohlenwasserstoff aufgeschlämmt und dazu die metallorganische Verbindung zugegeben. Die metallorganische Verbindung kann dabei als Reinsubstanz oder aber gelöst in einem aliphatischen und aromatischen Kohlenwasserstoff, bevorzugt Pentan, Hexan, Heptan, oder Toluol zugegeben werden. Es ist jedoch z.B. auch möglich die Lösung der metallorganischen Verbindung zum trockenen anorganischen Metalloxid zuzugeben. Reaktionsschritt a) kann bei Temperaturen von 0 bis 100°C, bevorzugt von 20 bis 50°C durchgeführt werden. Die Reaktionszeiten liegen im allgemeinen zwischen 1 min und 2 h, bevorzugt zwischen 5 min und 1 h.

Die metallorganische Verbindung wird üblicherweise in einem Bereich von 0,05 bis 10 mmol, bevorzugt von 0,2 bis 5 mmol und besonders bevorzugt von 0,4 bis 2 mmol pro g anorganisches Metalloxid eingesetzt.

In Schritt b) wird das aus Schritt a) erhaltene Material, meist ohne Aufarbeitung oder Isolation mit der Magnesiumverbindung umgesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Besonders bevorzugt werden Magnesiumverbindung MgR₂, wie z.B. Dimethylmagnesium, Diethylmagnesium, Dibutylmagnesium oder (Butyl)(Octyl)magnesium, unter anderem wegen ihrer guten Löslichkeit verwendet. In gemischten Verbindungen wie z.B. (Butyl)(Octyl)magnesium können die Reste R dabei in verschiedenen Verhältnissen zueinander vorliegen, so wird z.B. bevorzugt (Butyl)_{1,5}(Octyl)_{0,5}magnesium verwendet.

Als Lösungsmittel für Schritt b) sind die gleichen wie für Schritt a) geeignet. Die Reaktion wird üblicherweise bei Temperaturen im Bereich von 0 bis 150°C, bevorzugt von 20 bis 100°C und besonders bevorzugt von 30 bis 70°C durchgeführt. Die Reaktionszeiten liegen im allgemeinen im Bereich von 1 min bis 5 h, bevorzugt von 10 min bis 3 h und besonders bevorzugt von 30 min bis 2 h.

Die Magnesiumverbindung wird üblicherweise in einem Bereich von 0,5 bis 20, bevorzugt von 1 bis 10 und besonders bevorzugt von 2 bis 5 mmol pro g anorganisches Metalloxid eingesetzt.

Die nach Schritt b) erhaltene Zwischenstufe wird zumeist ohne Zwischenisolierung mit ein oder mehreren Alkoholen der allgemeinen Formel R-OH, worin die Variable R die obige Bedeutung hat, umgesetzt. Geeignete Alkohole sind z.B. Methanol, Ethanol, 1-Propanol, 2-Propanol, 1-Butanol, 2-Butanol, 1-Pentanol, 2-Pentanol, 1-Hexanol, 2-Ethylhexanol, 2,2-Dimethylethanol oder 2,2-Dimethylpropanol, insbesondere Ethanol, 1-Propanol, 1-Butanol, 1-Pentanol, 1-Hexanol oder 2-Ethylhexanol.

Als Lösungsmittel für Schritt c) sind die gleichen wie für Schritt a) geeignet. Die Reaktion wird üblicherweise bei Temperaturen im Bereich von 0 bis 80°C, bevorzugt von 10 bis 50°C und besonders bevorzugt von 20 bis 40°C durchgeführt. Die Reaktionszeiten liegen im allgemeinen im Bereich von 1 min bis 5 h, bevorzugt von 10 min bis 3 h und besonders bevorzugt von 30 min bis 2 h.

Das molare Verhältnis von eingesetztem Alkohol zu eingesetzter Magnesiumverbindung liegt üblicherweise in einem Bereich von 0,1:10 bis 20:1, bevorzugt von 0,5:10 bis 10:1 und besonders bevorzugt von 1:1 bis 2:1 eingesetzt.

Das so erhältliche anorganische Metalloxid mit der darauf abgeschiedenen Magnesiumverbindung kann danach direkt für Schritt A) verwendet werden. Bevorzugt wird es jedoch isoliert. Dies kann z.B. durch Abdestillieren des Lösungsmittels oder bevorzugt durch Filtration und Waschen mit einem aliphatischen Kohlenwasserstoff wie z.B. Pentan, Hexan oder Heptan erfolgen. Anschließend kann ein Trocknungsschritt folgen in dem restliches Lösungsmittel ganz oder teilweise entfernt wird.

Das anorganische Metalloxid mit der darauf abgeschiedenen Magnesiumverbindung wird in Schritt A) mit der tetravalenten Titanverbindung kontaktiert. Als Titanverbindungen werden im allgemeinen Verbindungen des vierwertigen Titans der Formel (RO)ₛX₄₋ₛTi eingesetzt, wobei die Reste R und X die obige Bedeutung besitzen und s eine Zahl von 0 bis 4 ist. Geeignet sind z.B. Tetraalkoxytitan wie Tetramethoxytitan, Tetraethoxytitan, Tetrapropoxytitan, Tetraisopropoxytitan, Tetrabutoxytitan oder Titan(IV)-(2-ethylhexylat), Trialkoxytitanhalogenide wie z.B. Titanchloridtriisopropylat und Titanterahalogenide. Bevorzugt sind Titanverbindungen mit X gleich Fluor, Chlor, Brom oder Jod, von denen Chlor besonders bevorzugt ist. Ganz besonders bevorzugt wird Titantetrachlorid verwendet.

Meist wird das anorganische Metalloxid mit der darauf abgeschiedenen Magnesiumverbindung mit einem Suspendiermittel aufgeschlämmt und dazu die Titanverbindung zugegeben. Es ist jedoch z.B. auch möglich die Titanverbindung im Suspendiermittel zu lösen und anschliessend zum anorganische Metalloxid mit der darauf abgeschiedenen Magnesiumverbindung zuzugeben. Bevorzugt ist die Titanverbindung im Suspensionsmittel löslich. Als Suspensionsmittel eignen sich besonders aliphatische und aromatische Kohlenwasserstoffe, wie z.B. Pentan, Hexan, Heptan, Oktan, Dodekan, Benzol oder einem C₇- bis C₁₀-Alkylbenzol wie Toluol, Xylol oder Ethylbenzol. Ein besonders bevorzugtes Lösungsmittel ist Ethylbenzol. Reaktionsschritt A) wird üblicherweise bei Temperaturen von 0 bis 100°C, bevorzugt von 20 bis 50°C durchgeführt werden. Die Reaktionszeiten liegen im allgemeinen zwischen 1 min und 2 h, bevorzugt zwischen 1 min und 1 h.

Im allgemeinen wird ein molares Verhältnis von eingesetzter Titanverbindung zu eingesetzter Magnesiumverbindung verwendet, welches im Bereich von 20:1 bis 0,05:1, bevorzugt von 10:1 bis 0,5:1 und besonders bevorzugt von 4:1 bis 1:1 liegt. Die Menge an eingesetzter Titanverbindung wird ausserdem üblicherweise so gewählt, dass sie in einem Bereich von 0,1 bis 20, bevorzugt von 0,5 bis 15 und besonders bevorzugt von 1 bis 10 mmol/g anorganisches Metalloxid liegt.

Die aus Schritt A) erhaltene Zwischenstufe kann optional mit einer Elektronendonorverbindung kontaktiert werden, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt wird eine Elektronendonorverbindung oder Gemische daraus verwendet. Die Auswahl geeigneter Donorverbindungen ist z.B. davon abhängig welche Monomere polymerisiert werden sollen. In der Regel werden für Ethylenhomo- und -copolymerisationen eher einfache Elektronendonorverbindungen wie Diethylketon, Dibutylether oder Tetrahydrofuran verwendet, während bei der Propenpolymerisation bevorzugt Elektronendonorverbindungen wie Phthalsäureester, Diester von 3- oder 4-gliedrigen, gegebenenfalls substituierten Cycloalkyl-1,2-dicarbonsäuren, sowie Monoester von gegebenenfalls substituierten Benzophenon-2-carbonsäuren Verwendung finden. Als Hydroxyverbindungen werden bei diesen Estern die bei Veresterungsreaktionen üblichen Alkohole verwendet, u.a. C₁-bis-C₁₅-Alkanole, C₅-bis-C₇-Cycloalkanole, die ihrerseits C₁-bis C₁₀-Alkylgruppen tragen können, ferner C₆-bis-C₁₀-Phenole. Bevorzugt werden für die Propenpolymerisation Phthalsäuremethoxid, Phthalsäureethoxid, Phthalsäurepropoxid oder Phthalsäurebutoxid verwendet.

Bevorzugt wird die Komponente aus Schritt A) ohne Zwischenisolierung bei Temperaturen von 0 bis 100°C, bevorzugt von 20 bis 50°C durchgeführt umgesetzt. Die Reaktionszeiten liegen im allgemeinen zwischen 1 min und 2 h, bevorzugt zwischen 1 min und 1 h.

Im allgemeinen wird das Verhältnis von eingesetzter Titanverbindun zu eingesetzter Elektronendonorverbindung im Bereich von 15:1 bis 0,5:1, bevorzugt von 10:1 bis 1:1 und besonders bevorzugt von 8:1 bis 2:1 verwendet.

In Schritt C) wird die nach Schritt A) oder B) erhaltene Zwischenstufe mit einem Polysiloxan der allgemeinen Formel 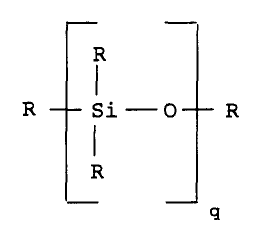 kontaktiert, worin die Variable R wie weiter oben definiert ist und worin der Index q gleich einer ganzen Zahl zwischen 3 und 4000 ist. Die Viskositäten solcher Polysiloxane liegen in der Regel zwischen 1 und 10⁶ mPa·s. Polysiloxane sind z.B. in Ullmann's Encyclopedia of Industrial Chemistry, Sixth Edition, 1999 Electronic Release unter dem Stichwort 'Silicones' beschrieben. Bevorzugte Reste R am Polysiloxan sind Methyl, Ethyl, Propyl und Phenyl und insbesondere Methyl. Polysiloxane sind z.B. unter dem Namen Silokonöl AK 150 bis 500000 von der Firma Wacker erhältlich. Bevorzugt sind Polysiloxane mit einem Index q größer 100 und besonders bevorzugt größer 1000. Bevorzugt sind Polysiloxane mit Viskositäten von 100 bis 500000 und besonders bevorzugt von 10000 bis 300000 mPa·s.

Die Zwischenstufe nach Schritt A) oder B), bevorzugt die Zwischenstufe nach Schritt B) wird bevorzugt ohne Zwischenisolierung bei Temperaturen von 0 bis 100°C, bevorzugt von 20 bis 40°C mit dem Polysiloxan umgesetzt. Die Reaktionszeiten liegen im allgemeinen zwischen 1 min und 5 h, bevorzugt zwischen 10 min und 2 h.

Im allgemeinen wird das Polysiloxan in einer Menge von 1 bis 50 Gew%, bevorzugt von 5 bis 40 Gew% und besonders bevorzugt von 10 bis 30 Gew% bezogen auf das eingesetzte anorganische Metalloxid verwendet.

Bevorzugt wird nach Schritt C) das Lösungsmittel vom Katalysatorsystem z.B. durch Abdestillieren des Lösungsmittels oder bevorzugt durch Abfiltrieren entfernt. Daran anschließend kann das so erhaltene erfindungsgemässe Katalysatorsystem ein oder mehrere Male mit einem aliphatischen Kohlenwasserstoff wie z.B. Pentan, Hexan oder Heptan gewaschen werden. Anschließend erfolgt bevorzugt ein Trocknungsschritt, in dem restliches Lösungsmittel ganz oder teilweise entfernt wird. Das so erhaltene erfindungsgemässe Katalysatorsystem kann vollständig trocken sein oder eine gewisse Restfeuchte aufweisen. Allerdings sollen die flüchtigen Bestandteile nicht mehr als 20, insbesondere nicht mehr als 10 Gew.-%, bezogen auf das Katalysatorsystem betragen.

Das so erhältliche erfindungsgemässe Katalysatorsystem weist vorteilhafterweise einen Titangehalt von 0,1 bis 30, bevorzugt von 0,5 bis 20 und besonders bevorzugt von 1 bis 10 Gew.-% auf.

Das Verfahren zur Polymerisation oder Copolymerisation von Olefinen in Gegenwart mindestens eines erfindungsgemäßen Katalysatorsystems und einer Aluminiumverbindung als Cokatalysator wird bei Temperaturen von 20 bis 150°C und Drücken von 1 bis 100 bar durchführt.

Das erfindungsgemäße Verfahren zur Polymerisation von Olefinen läßt sich mit allen technisch bekannten Polymerisationsverfahren bei Temperaturen im Bereich von 20 bis 150°C und unter Drücken von 5 bis 100 bar kombinieren. Die vorteilhaften Druck- und Temperaturbereiche zur Durchführung des Verfahrens hängen demgemäß stark von der Polymerisationsmethode ab. So lassen sich die erfindungsgemäß verwendeten Katalysatorsysteme in allen bekannten Polymerisationsverfahren, also beispielsweise in Suspensions-Polymerisationsverfahren, in Lösungs-Polymerisationsverfahren oder bei der Gasphasenpolymerisation einsetzen.

Von den genannten Polymerisationsverfahren ist die Gasphasenpolymerisation, insbesondere in Gasphasenwirbelschicht-Reaktoren, die Lösungspolymerisation, sowie die Suspensionspolymerisation, insbesondere in Schleifen- und Rührkesselreaktoren, bevorzugt. Geeignete Gasphasenwirbelschichtverfahren sind beispielsweise in der EP-A-0 004 645, der EP-A-0 089 691, der EP-A-0 120 503 oder der EP-A-0 241 947 im Detail beschrieben. Die verschiedenen oder auch gleichen Polymerisationsverfahren können auch wahlweise miteinander in Serie geschaltet sein und so eine Polymerisationskaskade bilden. Die Molmasse der dabei gebildeten Polyalk-1-ene kann durch Zugabe von in den Polymerisationstechniken gebräuchlichen Reglern, beispielsweise von Wasserstoff, kontrolliert und über einen weiten Bereich eingestellt werden. Des weiteren kann über die Menge des zudosierten Ziegler-Katalysators der Produktausstoß variiert werden. Die ausgetragenen (Co)Polymerisate können danach in einen Desodorier- oder Desaktivierbehälter weitergefördert werden, worin sie einer üblichen und bekannten Stickstoff und/ oder Wasserdampfbehandlung unterzogen werden können.

Ein besonders bevorzugtes Verfahren ist das Suspensionspolymerisationsverfahren, bei dem üblicherweise in einem Suspensionsmittel, vorzugsweise in einem Alkan, wie z.B. Propan, Isobutan oder Pentan polymerisiert wird. Die Polymerisationstemperaturen liegen i.a. im Bereich von 20 bis 115°C, der Druck i.a. im Bereich von 1 bis 100 bar. Der Feststoffgehalt der Suspension liegt i.a. im Bereich von 10 bis 80 %. Es kann sowohl diskontinuierlich, z.B. in Rührautoklaven, als auch kontinuierlich, z.B. in Rohrreaktoren, bevorzugt in Schleifenreaktoren, gearbeitet werden. Insbesondere kann nach dem Phillips-PF-Verfahren, wie in der US-3242150 und US-3248179 beschrieben, gearbeitet werden.

Nach dem erfindungsgemäßen Verfahren lassen sich verschiedene olefinisch ungesättigte Verbindungen polymerisieren, wobei dies auch die Copolymerisation umfaßt. Als Olefine kommen dabei neben Ethylen und α-Olefinen mit 3 bis 12 Kohlenstoffatomen, wie z.B. Propen, 1-Buten, 1-Penten, 1-Hexen, 1-Hepten, 1-Octen, 1-Nonen, 1-Decen oder 1-Dodecen auch nichtkonjugierte und konjugierte Diene wie Butadien, 1,5-Hexadien oder 1,6-Heptadien, cyclische Olefine wie Cyclohexen, Cyclopenten oder Norbornen und polare Monomere wie Acrylsäureester, Acrolein, Acrylnitril, Vinylether, Allylether und Vinylacetat in Betracht. Auch vinylaromatische Verbindungen wie Styrol lassen sich nach dem erfindungsgemäßen Verfahren polymerisieren. Bevorzugt wird mindestens ein Olefin ausgewählt aus der Gruppe Ethen, Propen, 1-Buten, 1-Penten, 1-Hexen, 1-Hepten, 1-Octen und 1-Decen und insbesondere Ethen polymerisiert. Eine bevorzugte Ausführungsform des erfindungsgemäßen Verfahrens ist dadurch gekennzeichnet, daß man als Monomere Gemische von Ethylen mit C₃- bis C₁₂-α-Olefinen, insbesondere mit C₃- bis C₈-α-Monoolefinen copolymerisiert (dies schließt auch Gemische aus drei und mehr Olefinen ein). In einer weiteren bevorzugten Ausführungsform des erfindungsgemäßen Verfahrens wird Ethylen zusammen mit einem Olefin ausgewählt aus der Gruppe Propen, 1-Buten, 1-Penten, 1-Hexen, 1-Hepten und 1-Octen copolymerisiert. Insbesondere diese letztgenannten Olefinen können in verflüssigtem oder flüssigem Zustand auch das Suspensions- oder Lösungsmittel in der Polymerisation- und Copolymerisationsreaktion bilden.

Die erfindungsgemäßen Katalysatorsysteme sind für sich teilweise nicht oder nur wenig polymerisationsaktiv und werden dann mit einer Aluminiumverbindung als Cokatalysator in Kontakt gebracht um gute Polymerisationsaktivität entfalten zu können. Als Cokatalysator geeignete Aluminiumverbindungen sind vor allem Verbindungen der Formel AlRₘX₃₋ₘ, worin die Variablen wie oben definiert sind. Insbesondere sind neben Trialkylaluminium auch solche Verbindungen als Cokatalysator geeignet, bei denen eine oder zwei Alkylgruppe durch eine Alkoxygruppe ersetzt ist, insbesondere C₁- bis C₁₀-Dialkylaluminiumalkoxide wie Diethylaluminiumethoxid oder durch ein oder zwei Halogenatom, beispielsweise durch Chlor oder Brom, ersetzt sind, insbesondere Dimethylaluminiumchlorid, Methylaluminiumdichlorid, Methylaluminiumsesquichlorid oder Diethylaluminiumchlorid. Bevorzugt werden Tialkylaluminiumverbindungen verwendet, deren Alkylgruppen jeweils 1 bis 15 C-Atome aufweisen, beispielsweise Trimethylaluminium, Methyldiethylaluminium, Triethylaluminium, Triisobutylaluminium, Tributylaluminium, Trihexylaluminium oder Trioctylaluminium. Auch Cokatalysatoren vom Alumoxantyp können verwendet werden, insbesondere Methylalumoxan MAO. Alumoxane werden z.B. durch kontrollierte Addition von Wasser zu Alkylaluminium-verbindungen, insbesondere Trimethylaluminium, hergestellt. Als Co-Katalysator geeignete Alumoxan-Zubereitungen sind kommerziell erhältlich.

Die Menge der zu verwendenden Aluminiumverbindungen hängt von ihrer Wirksamkeit als Cokatalysator ab. Da viele der Cokatalysatoren gleichzeitig zur Entfernung von Katalysatorgiften verwendet werden (sogenannte scavenger), ist die eingesetzte Menge von der Verunreinigung der übrigen Einsatzstoffe abhängig. Der Fachmann kann jedoch durch einfaches Probieren die optimale Menge bestimmen. Bevorzugt wird der Cokatalysator in einer solchen Menge eingesetzt, daß das Atomverhältnis zwischen Aluminium aus der Aluminiumverbindung, welche als Cokatalysator verwendet wird und Titan aus dem erfindungsgemässen Katalysatorsystem 10:1 bis 800:1, insbesondere 20:1 bis 200:1 beträgt.

Die verschiedenen Aluminiumverbindungen können in beliebiger Reihenfolge einzeln oder auch als Gemisch zweier oder mehrerer Komponenten als Cokatalysator verwendet werden. So kann man diese als Cokatalysatoren wirkenden Aluminiumverbindungen sowohl nacheinander als auch zusammen auf die erfindungsgemässen Katalysatorsysteme einwirken lassen. Das erfindungsgemässe Katalysatorsystem kann dabei entweder vor oder nach Kontaktierung mit den zu polymerisierenden Olefinen mit der oder den Cokatalysatoren in Kontakt gebracht werden. Auch eine Voraktivierung mit ein oder mehreren Cokatalysatoren vor der Durchmischung mit dem Olefin und weitere Zugabe der gleichen oder anderer Cokatalysatoren nach Kontaktierung des voraktivierten Gemisches mit dem Olefin ist möglich. Eine Voraktivierung erfolgt üblicherweise bei Temperaturen von 0 bis 150°C, insbesondere von 20 bis 80°C und Drücken von 1 bis 100 bar, insbesondere von 1 bis 40 bar.

Um ein breites Produktspektrum zu erhalten, können die erfindungsgemäßen Katalysatorsysteme auch in Kombination mit mindestens einem für die Polymerisation von Olefinen üblichen Katalysator verwendet werden. Als Katalysatoren kommen hierbei besonders Phillips Katalysatoren auf der Basis von Chromoxiden, Metallocene (z.B. EP-A-129368), die sogenannten constrained geometry Komplexe(siehe z.B. EP-A-0416815 oder EP-A-0420436), Nickel und Palladium Bisimin-Systeme (zu deren Darstellung siehe WO-A-98/03559), Eisen und Cobalt Pyridinbisimin-Verbindungen (zu deren Darstellung siehe WO-A-98/27124) oder Chromamide (siehe z.B. 95JP-170947) verwendet werden. So können durch derartige Kombinationen z.B. bimodale Produkte hergestellt oder in situ Comonomer erzeugt werden. Bevorzugt wird hierbei das erfindungsgemäße Katalysatorsystem in Gegenwart von mindestens einem für die Polymerisation von Olefinen üblichen Katalysator und gewünschtenfalls ein oder mehreren Cokatalysatoren verwendet. Die zur Polymerisation von Olefinen üblichen Katalysator können auf dem gleichen anorganischen Metalloxid aufgezogen sein oder auf einem anderen Trägermaterial fixiert sein und gleichzeitig oder in einer beliebigen Reihenfolge mit dem erfindungsgemäßen Katalysatorsystem verwendet werden.

Durch das erfindungsgemäßen Verfahren lassen sich Polymerisate von Olefinen mit Molmassen im Bereich von etwa 10000 bis 5000000, bevorzugt 20000 bis 1000000 darstellen, wobei Polymerisate mit Molmassen (Gewichtsmittel) zwischen 20 000 und 400 000 besonders bevorzugt werden.

Die erfindungsgemäßen Katalysatorsysteme eignen sich besonders gut zur Herstellung von Ethylenhomopolymerisaten und -copolymerisaten mit α-Olefinen. So können Homopolymere von Ethylen oder Copolymere von Ethylen mit C₃- bis C₁₂-α-Olefin mit bis zu 10 Gew.-% Comonomer im Copolymer hergestellt werden. Bevorzugte Copolymere enthalten von 0,3 bis 1,5 Mol.-% Hexen, bezogen auf das Polymere und besonders bevorzugt 0,5 bis 1 Mol.-% Hexen.

Das erfindungsgemässe Polymerisat kann mit anderen Olefinpolymeren, insbesondere Ethylenhomo- und copolymeren auch Mischungen bilden. Diese Mischungen können einerseits durch das oben beschriebene gleichzeitige polymerisieren mehrerer Katalysatoren hergestellt werden. Andererseits kann man diese Mischungen auch einfach durch nachträgliches Blenden der erfindungesgemäßen Polymere mit anderen Ethylenhomopolymerisaten bzw. -copolymerisaten erhalten.

Die Polymerisate, Ethylencopolymere, Polymermischungen und Blends können außerdem noch an sich bekannte Hilfs- und/oder Zusatzstoffe enthalten, wie Verarbeitungsstabilisatoren, Stabilisatoren gegen Licht- und Wärmeeinflüsse, übliche Additive wie Gleitmittel, Antioxidationsmittel, Antiblockmittel und Antistatika, sowie gegebenenfalls Farbstoffe. Art und Menge dieser Zusatzstoffe sind dem Fachmann geläufig.

Die erfindungsgemässen Polymere können auch nachträglich noch modifiziert werden durch Grafting, Vernetzung, Hydrierung, Funktionalisierung oder andere Funktionalisierungsreaktionen, die dem Fachmann bekannt sind.

Auf Grund ihrer guten mechanischen Eigenschaften eignen sich die mit den erfindungsgemäßen Katalysatorsystemen hergestellten Polymerisate und Copolymerisate von Olefinen, insbesondere die Ethylenhomopolymerisate und -copolymerisate vor allem für die Herstellung von Folien, Fasern und Formkörpern.

Das erfindungsgemäße Katalysatorsystem weist gegenüber dem gleichen Katalysatorsystem ohne Polysiloxan eine deutlich höhere Produktivität, insbesondere bei Suspensionspolymerisationen auf. Die auf diese Weise erhältlichen Polymerisate zeichnen sich auch durch eine hohe Schüttdichte und einem niedrigen Restchlorgehalt aus.

Beispiele und Vergleichsversuche

### Beispiel 1

### Herstellung des anorganischen Metalloxides mit einer darauf abgeschiedenen Magnesiumverbindung

In einer ersten Stufe wurden 131,5 g feinteiliges sprühgetrocknetes Silicagel, das einen Teilchendurchmesser von 20 bis 45 µm, ein Porenvolumen von 1,5 cm³/g und eine spezifische Oberfläche von 260 m²/g aufwies, in 900 ml Ethylbenzol suspendiert und unter Rühren mit 55,2 ml Diethylaluminiumchlorid (110,4 mmol; 2M in Heptan) versetzt. Dabei stieg die Temperatur von 23 auf 40°C. Nach weiterem 10 min Rühren wurden 417,3 ml (n-Butyl)_{1,5}(Octyl)_{0,5}magnesium (0,875 M in n-Heptan) zugegeben, wobei die Temperatur von 38 auf 52°C anstieg. Danach wurde die Suspension auf 60°C erwärmt und 30 min bei dieser Temperatur gerührt. Nach Abkühlen auf Raumtemperatur wurde eine Lösung von 40,3 ml Ethanol in 100 ml Ethylbenzol langsam zugetropft, so dass die Reaktionstemperatur unter 40°C blieb. Dieses Gemisch wurde 30 min bei Raumtemperatur gerührt und anschließend der so erhaltene feste Stoff abfiltriert, zweimal mit Heptan und einmal mit Pentan gewaschen und unter Vakuum bei Raumtemperatur getrocknet. Es wurden 178,2 g des Silicagels mit der darauf abgeschiedenen Magnesiumverbindung erhalten.

### Beispiel 2

### Herstellung des Katalysatorsystems

Zu einer Suspension aus 23,2 g des aus Beispiel 1 erhaltenen Silicagels mit der darauf abgeschiedenen Magnesiumverbindung in 100 ml Ethylbenzol wurden 13,1 ml Titantetrachlorid zugegeben. Dabei stieg die Temperatur von 23 auf 36°C an. Nach 10 Minuten Rühren wurden 2,33 ml THF zugegeben, worauf die Temperatur von 33 auf 41°C anstieg. Nach weiteren 10 min Rühren, wurden 45,3 g Silikonöl AK 100000 (Wacker Chemie, wobei 100000 die Viskosität bedeutet), gelöst in 200 ml Ethylbenzol zugegeben und die Suspension 1 h bei Raumtemperatur gerührt. Anschließend wurde der so erhaltene feste Stoff abfiltriert, zweimal mit Heptan und einmal mit Pentan gewaschen und unter Vakuum bei Raumtemperatur getrocknet. Es wurden 31,2 g des Katalysatorsystems erhalten.

### Beispiel 3

### Herstellung des Katalysatorsystems

Zu einer Suspension aus 21,9 g des aus Beispiel 1 erhaltenen Silicagels mit der darauf abgeschiedenen Magnesiumverbindung in 100 ml Ethylbenzol wurden 12,3 ml Titantetrachlorid zugegeben. Dabei stieg die Temperatur von 23 auf 35°C an. Nach 10 Minuten Rühren wurden 2,2 ml THF zugegeben, worauf die Temperatur von 32 auf 41°C anstieg. Nach weiteren 10 min Rühren, wurden 3,1 g Silikonöl AK 1000000 gelöst in 50 ml Ethylbenzol zugegeben und die Suspension 1 h bei Raumtemperatur gerührt. Anschließend wurde der so erhaltene feste Stoff abfiltriert, zweimal mit Heptan und einmal mit Pentan gewaschen und unter Vakuum bei Raumtemperatur getrocknet. Es wurden 29,9 g des Katalysatorsystems erhalten.

### Beispiel 4 (Vergleichsbeispiel)

### Herstellung eines Katalysatorsystems ohne Silikonöl

Zu einer Suspension aus 26,9 g des aus Beispiel 1 erhaltenen Silicagels mit der darauf abgeschiedenen Magnesiumverbindung in 100 ml Ethylbenzol wurden 15,1 ml Titantetrachlorid zugegeben. Dabei stieg die Temperatur von 24 auf 41°C an. Nach 5 Minuten Rühren wurden 2,69 ml THF zugegeben, worauf die Temperatur von 36 auf 45°C anstieg und die Suspension danach 1 h bei Raumtemperatur gerührt. Anschließend wurde der so erhaltene feste Stoff abfiltriert, zweimal mit Heptan und einmal mit Pentan gewaschen und unter Vakuum bei Raumtemperatur getrocknet. Es wurden 39,9 g eines Katalysatorsystems ohne Silikonöl erhalten.

### Beispiele 5 bis 7

### Polymerisation

Die Polymerisationen wurden in einem 101-Rührautoklaven durchgeführt. Unter Stickstoff wurde bei Raumtemperatur 1 g TEAL (Triethylaluminium) zusammen mit 5 l Isobutan in den Autoklaven gegeben. Dann wurde Ethen aufgepresst, so dass der Gesamtdruck 37 bar betrug. Danach wurde unter Rühren auf 68°C erwärmt und anschließend die in Tabelle 1 angegebene Einwaage der Katalysatorsysteme aus den Beispielen 2 bis 4 mit einem Ethylenüberdruck eingepresst und durch automatische Regelung anschließend die Polymerisationsbedingungen von 40 bar Gesamtdruck und 70°C Reaktorinnentemperatur eingestellt. Nach 1 h wurde die Polymerisation durch Entspannen abgebrochen.

In der nachfolgenden Tabelle 1 sind sowohl für die erfindungsgemäße Beispiele 5 und 6 als auch für das Vergleichsbeispiel 7 die Produktivität der eingesetzten Katalysatorsysteme aus den Beispielen 2 bis 4 und einige der Eigenschaften der daraus erhaltenen Polymere angegeben.

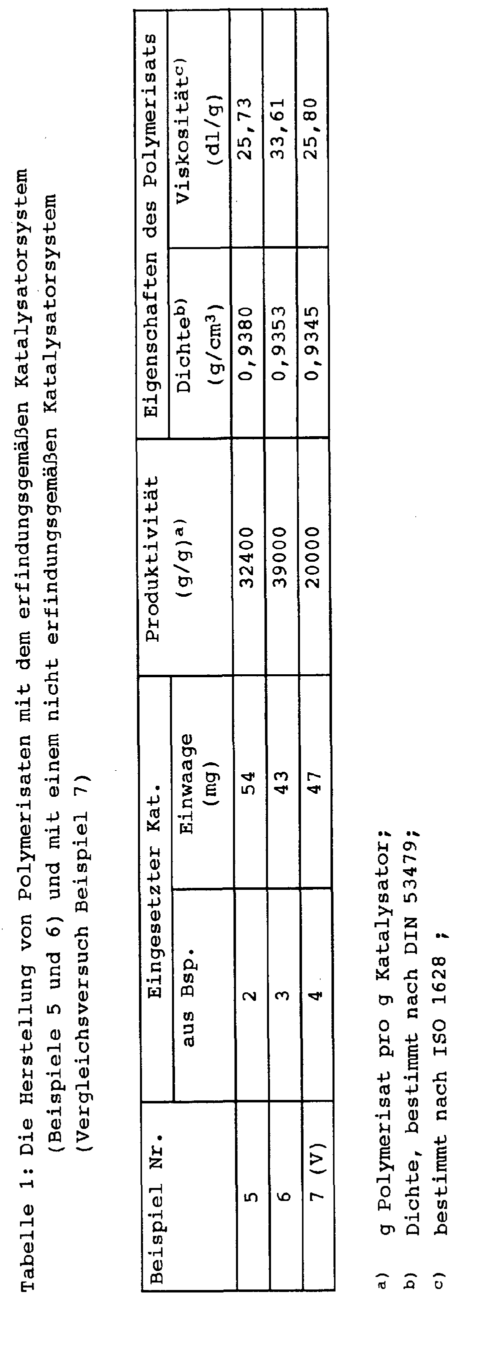

## Patentansprüche

1. Verfahren zur Herstellung von Katalysatorsystemen vom Typ der Ziegler-Natta-Katalysatoren, **dadurch gekennzeichnet, dass** es folgende Schritte umfasst:
A) Kontaktieren eines anorganischen Metalloxides, welches eine darauf abgeschiedene Magnesiumverbindung enthält, mit einer tetravalenten Titanverbindung,
B) gegebenenfalls Kontaktieren der so erhaltenen Zwischenstufe mit einer Elektronendonorverbindung und
C) Kontaktieren der nach Schritt A) oder B) erhaltenen Zwischenstufe mit einem Polysiloxan.

2. Verfahren zur Herstellung von Katalysatorsystemen nach Anspruch 1, **dadurch gekennzeichnet, dass** das anorganische Metalloxid, welches eine darauf abgeschiedene Magnesiumverbindung enthält, durch ein Verfahren herstellbar ist, welches folgende Schritte umfasst:
a) Optionales Kontaktieren eines anorganischen Metalloxides mit einer metallorganischen Verbindung der Gruppe 13 des Periodensystems (gemäss IUPAC-Vorschlag 1985),
b) Kontaktieren der nach Schritt a) erhaltenen Zwischenstufe oder des anorganischen Metalloxides mit einer Magnesiumverbindung MgRₙX_{2-n,}
worin X unabhängig voneinander Fluor, Chlor, Brom, Jod, Wasserstoff, NR₂, OR, SR, SO₃R oder OC(O)R, und R unabhängig voneinander ein C₁-C₂₀ lineares, verzweigtes oder cyclisches Alkyl, ein C₂-C₁₀-Alkenyl, ein Alkylaryl mit 1-10 C-Atomen im Alkylrest und 6-20 C-Atomen im Arylrest oder ein C₆-C₁₈-Aryl bedeutet und n gleich 1 oder 2 ist, und anschliessend
c) Kontaktieren der nach Schritt b) erhaltenen Zwischenstufe mit einem Alkohol der Formel R-OH, worin R die unter b) genannte Bedeutung hat.

3. Verfahren zur Herstellung von Katalysatorsystemen nach Anspruch 2, **dadurch gekennzeichnet, dass** die metallorganischen Verbindung der Gruppe 13 des Periodensystems, eine Aluminiumverbindung AlRₘX₃₋ₘ ist, worin die Variablen die Bedeutung gemäß Anspruch 2 haben und m gleich 1, 2 oder 3 ist.

4. Verfahren zur Herstellung von Katalysatorsystemen nach Anspruch 2 oder 3, **dadurch gekennzeichnet, dass** eine Magnesiumverbindung MgR₂ verwendet wird.

5. Verfahren zur Herstellung von Katalysatorsystemen nach den Ansprüchen 2 bis 4, **dadurch gekennzeichnet, dass** als Alkohol, Ethanol, 1-Propanol, 1-Butanol, 1-Pentanol, 1-Hexanol oder 2-Ethylhexanol verwendet wird.

6. Verfahren zur Herstellung von Katalysatorsystemen nach den Ansprüchen 1 bis 5, **dadurch gekennzeichnet, dass** als anorganisches Metalloxid ein Silicagel eingesetzt wird.

7. Verfahren zur Herstellung von Katalysatorsystemen nach den Ansprüchen 1 bis 6, **dadurch gekennzeichnet, dass** als tetravalente Titanverbindung Titantetrachlorid eingesetzt wird.

8. Katalysatorsysteme vom Typ der Ziegler-Natta-Katalysatoren, herstellbar durch ein Verfahren gemäß den Ansprüchen 1 bis 7.

9. Verfahren zur Polymerisation oder Copolymerisation von Olefinen bei Temperaturen von 20 bis 150°C und Drücken von 1 bis 100 bar, **dadurch gekennzeichnet, daß** die Polymerisation oder Copolymerisation in Gegenwart mindestens eines Katalysatorsystems gemäß Anspruch 8 und einer Aluminiumverbindung als Co-katalysator durchgeführt wird.

10. Verfahren zur Polymerisation oder Copolymerisation von Olefinen nach Anspruch 9, **dadurch gekennzeichnet, dass** als Aluminiumverbindung eine Trialkylaluminiumverbindung verwendet wird, deren Alkylgruppen jeweils 1 bis 15 C-Atome aufweisen.

11. Verfahren zur Polymerisation oder Copolymerisation von Olefinen nach Anspruch 9 oder 10, **dadurch gekennzeichnet, dass** die Polymerisation in Suspension durchgeführt wird.

12. Verfahren zur Polymerisation oder Copolymerisation von Olefinen nach den Ansprüchen 9 bis 11, **dadurch gekennzeichnet, dass** Ethylen oder Gemische aus Ethylen und C₃- bis C₈-α-Mono-olefinen (co)polymerisiert werden.

13. Ethylenhomopolymerisate und -copolymerisate mit α-Olefinen erhältlich nach dem Verfahren gemäß Anspruch 12.

14. Verwendung der Ethylenhomopolymerisate und -copolymerisate gemäß Anspruch 13 zur Herstellung von Folien, Fasern und Formkörpern.

15. Folien, Fasern und Formkörper enthaltend Ethylenhomopolymerisate und -copolymerisate gemäß Anspruch 13.
